# EUROPÄISCHE PATENTSCHRIFT

(11) **EP 2 843 470 B1**
(45) Veröffentlichungstag und Bekanntmachung des Hinweises auf die Patenterteilung: **06.07.2022**
(21) Anmeldenummer: 14002692.3
(22) Anmeldetag: 01.08.2014
(51) Int. Cl.: G03B 21/58, G09F 11/29, G09F 19/18, A63B 63/00, G09F 23/00, G09F 11/30

(54) **VORRICHTUNG ZUR VISUELLEN DARSTELLUNG VON INFORMATIONEN**
DEVICE FOR PROVIDING VISUAL PRESENTATIONS OF INFORMATION
DISPOSITIF DE REPRÉSENTATION VISUELLE D'INFORMATIONS

(30) Priorität: 03.09.2013 DE 102013014538
(43) Veröffentlichungstag der Anmeldung: 04.03.2015
(73) Patentinhaber: Haspo Sportgeräte GmbH & Co. KG, 38723 Seesen (DE)
(72) Erfinder: Traupe, Lutz, D-38274 Elbe-Gustedt (DE)
(74) Vertreter: Sobisch, Peter

(56) Entgegenhaltungen:
- WO-A1-2008/151650
- WO-A2-2008/021300
- WO-A2-2010/130835
- DE-A1- 10 240 564
- ES-U- 1 077 634

## Beschreibung

Die Erfindung bezieht sich auf eine Vorrichtung entsprechend dem Oberbegriff des Anspruchs 1.

Eine solche Vorrichtung ist aus der DE 102 40 564 A1 bekannt. Sie ist als Werbeeinrichtung konzipiert und wird durch ein Fußballtor verkörpert, dessen Querholm zum Aufwickeln sowie zum Abwickeln einer bahnförmigen, zumindest ein Werbebild zeigenden Werbeträgers ausgebildet ist. Zumindest für den Vorgang des Aufwickelns des Werbeträgers ist ein motorischer Antrieb vorgesehen. In Ausgestaltung dieses Prinzips können mehrere, nebeneinander angeordnete, jeweils unabhängig voneinander betätigbare, das heißt ab- und aufwickelbare Werbeträger vorgesehen sein. Antriebe für ein Auf- und / oder Abwickeln der Werbeträger sind in die Struktur des Querholmes des Fußballtores integriert. Die Werbeträger sind auf einer Welle innerhalb eines langestreckten Gehäuses gelagert, welches zur Befestigung an dem Querholm eines Fußballtores bestimmt ist. Durch die Gesamtheit der auf einem Werbeträger dargestellten Informationen ist die Variabilität dieser Vorrichtung jedoch begrenzt und ein Auswechseln eines Werbeträgers zwecks Änderung der auf diesem Wege zu vermittelnden Informationen ist mit einem vergleichsweise großen Aufwand verbunden.

Vergleichbares gilt auch für die aus der WO 2008151650 A1 bekannte Werbevorrichtung, bei der Antriebe für ein Auf- und / oder Abwickeln eines um eine innerhalb des Querholmes eines Fußballtores verlaufende Achse in einen der Pfosten des Tores integriert sind.

Gleiches gilt schließlich auch für den aus der GB 2 319 879 A bekannten Werbeträger.

Aus der WO 2008/021 300 A2 ist eine für Werbezwecke bei Sportveranstaltungen bestimmte Präsentationsvorrichtung bekannt, welche eine oder mehrere Projektionsvorrichtungen sowie eine oder mehrere Projektionsflächen umfasst. Als Projektionsfläche kann das Netz eines Fußballtores oder eine sonstige ortsfest aufgestellte bzw. angebrachte flächenhafte Struktur herangezogen werden, wobei auch an Tragseilen aufgehängte und motorisch oder manuell auf- sowie abwickelbare bahnförmige Projektionsflächen in Betracht kommen. Das Netz eines Tores ist zumindest keine optimale Projektionsfläche und die Aufstellung zusätzlicher Trag- oder Halteeinrichtungen in einer Sportanlage zur Anbringung von Projektionsflächen ist ein nicht unbeträchtlicher baulicher Aufwand und darüber hinaus geeignet, das optische Erscheinungsbild der Anlage zu beeinträchtigen.

Aus der US 2010/0048299 A1 ist ein an Seilen hinter einem Fußballtor aufgehängter als Projektionsfläche konzipierter Werbeträger bekannt, der mit einer vor dem Tor befindlichen Projektionsvorrichtung zusammenwirkt, wobei mittels einer Kamera die exakte Position eines Werbebildes auf der Projektionsfläche steuerbar ist. Auch dieser Werbeträger erfordert beträchtliche bauliche Maßnahmen außerhalb des Tores zur Aufstellung der Projektionsfläche.

Es ist vor diesem Hintergrund die Aufgabe der Erfindung, eine Vorrichtung der eingangs genannten Art mit Hinblick auf eine einfache Variabilität der vermittelten Information zu verbessern, und zwar ohne das äußere Erscheinungsbild eines Fußballtores zu verändern. Gelöst ist diese Aufgabe bei einer solchen Vorrichtung durch die Merkmale des Kennzeichnungsteils des Anspruchs 1.

Erfindungswesentlich ist hiernach, das zur visuellen Informationsvermittlung eine Anordnung von wenigstens zwei bahnförmigen Projektionsträgern benutzt wird, deren Präsentationsfläche zur Informationswiedergabe, somit für Bilder, Texte, jedoch auch für Filme nutzbar ist. Die zu vermittelnden Informationen, bei denen es sich beispielsweise um Werbung handeln kann, sind im einfachsten Fall in einer Projektionsvorrichtung gespeichert, so dass ein einfaches Ändern dieser Informationen möglich ist. In der inaktiven Position ist der Projektionsträger völlig in Teile des Torrahmens oder dergleichen zurückgezogen, wohingegen in der aktiven Position die von dem Torrahmen umgrenzte Fläche durch den Projektionsträger im wesentlichen vollständig abgedeckt ist. Insbesondere aufgrund der Nutzung bei Fußballtoren ist auf diese Weise die Möglichkeit gegeben, z. B. Werbeaussagen in textlicher oder auch grafischer Form einem breiten Publikum zu präsentieren, um für ein Produkt oder auch eine Dienstleistung eine größtmögliche Publizität zu erreichen. Es sind wenigstens zwei nebeneinander angeordnete, um eine gemeinsame horizontale Achse unabhängig voneinander auf- und abwickelbare Projektionsträger vorgesehen. Deren Präsentationsflächen können ein einheitliches Bild vermitteln - es kann sich jedoch auch um voneinander getrennte Bilder handeln. Dadurch, dass die gesamte Präsentationsfläche durch zwei Projektionsträger dargestellt ist, die auf voneinander getrennten Wellen auf- sowie ab-wickelbar angeordnet sind, ist auch bei den Abmessungen eines Fußballtores eine mechanisch stabile Konstruktionsform gegeben, mit der sich eine genaue Führung für die Projektionsträger darstellen lässt. Die für beide Projektionsträger gemeinsame horizontale Achse erstreckt sich innerhalb des hohl ausgebildeten Querholms des Fußballtores.

Den Projektionsträgern sind Antriebe zum Auf- und/oder Abwickeln zugeordnet, die vollständig in den Querholm des Fußballtores eingebunden sind. Das äußere Erscheinungsbild des Tores gegebenenfalls einschließlich dessen äußerer technischer Merkmale wird somit nicht verändert. Im Fall einer horizontalen gemeinsamen Achse der beiden Projektionsträger innerhalb des Querholms sind im allgemeinen Antriebe zum Aufwickeln ausreichend, da ein Abwickeln alleine unter Schwerkrafteinfluss darstellbar ist.

Die Projektionsvorrichtung ist hinter und mit Abstand zu dem Fußballtor positioniert.

Die Projektionsvorrichtung / die Projektionsvorrichtungen stehen mit einer entfernt angeordneten Steuerungseinrichtung in Wirkverbindung, welche besonders vorteilhaft durch eine Funkstrecke darstellbar ist. Dies eröffnet die Möglichkeit, den Betrieb der erfindungsgemäßen Vorrichtung von einer mit Abstand zu dem Fußballtor gelegenen Stelle aus zu steuern sowie gegebenenfalls die zu vermittelnden Informationen im Bedarfsfall zu verändern.

Alternativ können entsprechend den Merkmalen des Anspruchs 2 auch mehrere, voneinander beabstandete Projektionsvorrichtungen vorgesehen sein, durch welche jeweils voneinander unabhängige Bilder auf die / alle Projektionsträger übertragen werden.

Ein Fußballtor ist mit Hinblick auf einen Zweck der Vorrichtung, nämlich Werbeinformationen zu vermitteln, eine mögliche Anwendung. Es kommen jedoch neben Handballtoren usw. auch sonstige Verwendungsmöglichkeiten in Betracht, wo immer ein rahmenartiger Träger zur Verfügung steht und es darum geht, in einfacher und effektiver, insbesondere flexibler Weise bestimmte Informationen einem möglichst breiten Publikum zu vermitteln.

Die Erfindung wird im Folgenden unter Bezugnahme auf das in den beiliegenden Zeichnungen dargestellte Ausführungsbeispiel näher erläutert werden. Es zeigen:
Fig. 1 ein erfindungsgemäß ausgerüstetes Fußballtor in perspektivischer Ansicht;

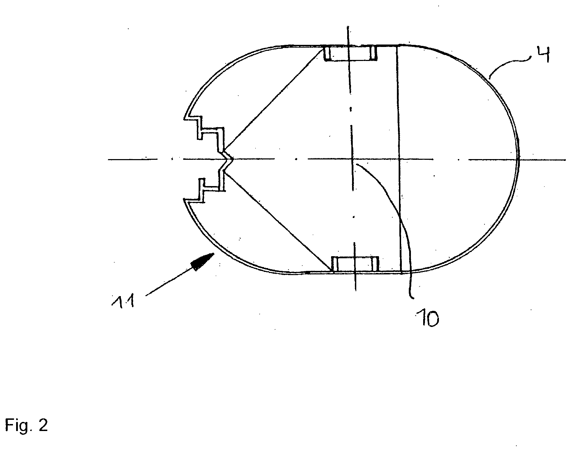

Fig. 2 eine isolierte vergrößerte Querschnittsdarstellung des Querholmes des Fußballtores gemäß Fig. 1.

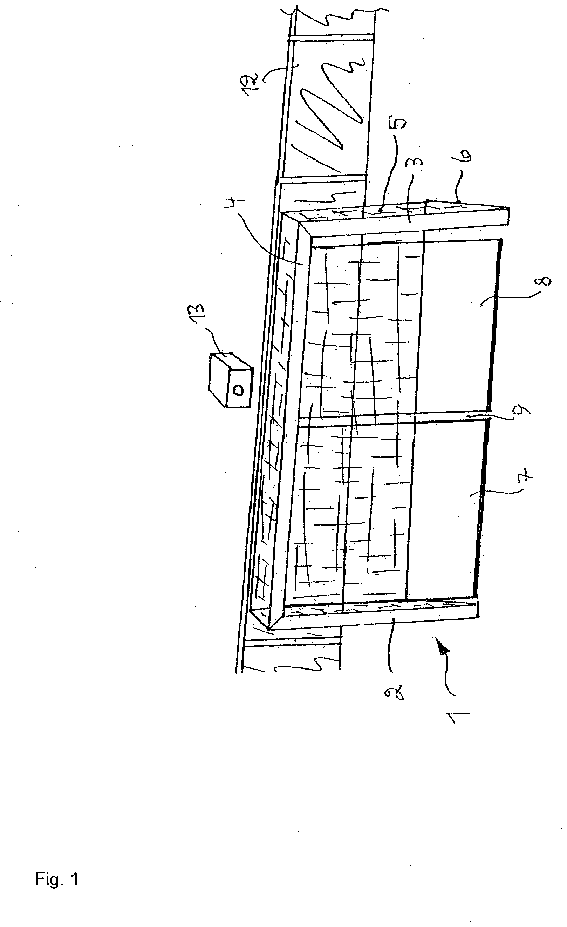

Mit 1 ist in Fig. 1 ein Fußballtor bezeichnet, welches aus zwei seitlichen sich vertikal erstreckenden Holmen 2, 3 sowie einem diese oberseitig verbindenden, sich horizontal erstreckenden Querholm 4 besteht. Die bezogen auf die zeichnerische Darstellung Rückseite des Fußballtores 1 ist durch ein Auffangnetz 5 gekennzeichnet, welches in einem Gestell 6 in an sich bekannter Weise gehalten ist.

Der Querholm 4 ist als eine Hohlstruktur ausgebildet und dient der Aufnahme von zwei nebeneinander angeordneten bahnförmigen, aufwickelbaren Projektionsträgern 7, 8, die im aufgewickelten Zustand vollständig in dem Profil des Querholmes 4 aufgenommen sind. Im abgewickelten Zustand wird die durch die Holme 2, 3 sowie den Querholm 4 umgrenzte, in etwa rechteckige Fläche im wesentlichen vollständig abgedeckt, so dass die beiden Projektionsträger mittig unter Belassung eines geringen Abstands 9 geführt sind.

Innerhalb des Querholmes 4 sind die beiden Projektionsträger 7, 8 um voneinander getrennte Wellen um die Achse 10 aufwickelbar, wobei ein Abwickeln in die in Fig. 1 dargestellte aktive Stellung unter Schwerkrafteinfluss erfolgt, und wobei diese Eigenschaft durch ein sich entlang des äußeren Kante der beiden Projektionsträger erstreckendes streifenartiges Ballastgewicht unterstützt werden kann. Ein Aufwickeln erfolgt in jedem Fall unter Mitwirkung von Elektromotoren, in die Struktur des Querholmes 4 eingebaut sind, so dass das äußere Erscheinungsbild eines Fußballtores durch diese nicht verändert wird. Ein Austritt der Projektionsträger 2, 3 aus dem Querholm 4 erfolgt über zeichnerisch nicht dargestellte Schlitze, die sich an der Stelle 11 befinden und eine, dem jeweiligen Projektionsträger entsprechende Längenerstreckung aufweisen.

Fig. 1 zeigt eine Spielfeldbegrenzung 12 sowie eine Projektionsvorrichtung 13 an der Rückseite des Fußballtores 1, etwa mittig zu diesem. Die Projektionsvorrichtung 13 kann mit der Maßgabe ausgebildet sein, dass sie ein sich über die Präsentationsflächen beider sich in der aktiven Stellung befindlicher Projektionsträger 7, 8 einheitliches Bild generiert, wobei es sich um Informationsvermittlung nach Art eines Werbeträgers handeln kann.

Alternativ hierzu können die Projektionsflächen der beiden Projektionsträger 7, 8 auch zur Wiedergabe bewegter Bilder benutzt werden, und zwar unter Zugrundelegung einer über die Projektionsvorrichtung beliebig programmierbaren Abfolge. Schließlich besteht auch die Möglichkeit, die Präsentationsflächen der beiden Projektionsträger 7, 8 zur Darstellung voneinander unabhängiger Informationen zu benutzen. Dis wird dadurch ermöglicht dass entweder zwei oder mehr voneinander getrennte Projektionsvorrichtungen 13 vorgesehen werden oder dadurch dass die eine Projektionsvorrichtung entsprechend der Anzahl der zu übertragenden Bilder gespaltenes Gesamtbild generiert.

Man erkennt, dass mit der erfindungsgemäßen Vorrichtung ein außerordentlich vielfältig zur Wiedergabe von Informationen nutzbarer Werbeträger zur Verfügung gestellt wird, der insbesondere in einfachster Weise hinsichtlich der visuell wahrnehmbaren Informationen umrüstbar ist.

### Bezugszeichenliste:

- 1.: Fussballtor
- 2.: Holm
- 3.: Holm
- 4.: Querholm
- 5.: Auffangnetz
- 6.: Gestell
- 7.: Projektionsträger
- 8.: Projektionsträger
- 9.: Abstand
- 10.: Achse
- 11.: Stelle
- 12.: Spielfeldbegrenzung
- 13.: Projektionsvorrichtung

## Patentansprüche

1. Vorrichtung zur visuellen Darstellung von Informationen mit einer Anordnung von wenigstens zwei, zwischen einer aktiven, zur Vermittlung von Informationen und einer inaktiven, keine Informationen vermittelnden Position bewegbaren, bahnförmigen Trägern, welche Anordnung in den Rahmen eines Fußballtores (1) eingebunden ist, wobei die Träger unabhängig voneinander zwischen der aktiven und der inaktiven Position um eine horizontale, sich innerhalb des Querholmes (4) des Fußballtores (1) erstreckende Achse (10) auf- sowie abwickelbar sind, und wobei zum Auf-und / oder Abwickeln der Träger in die Struktur des Querholmes (4) des Fußballtores (1) Antriebe (7, 8) eingebunden sind, **dadurch gekennzeichnet, dass** der Querholm (4) als Hohlstruktur ausgebildet ist, hierbei das äußere Erscheinungsbild des Fußballtores (19 nicht verändernd, dass die Träger Projektionsträger (7, 8) sind, dass zur Informationsübertragung auf die Projektionsträger (7, 8) zumindest eine Projektionsvorrichtung (13) mit Abstand zu und hinter dem Fußballtor (1) angeordnet ist, dass die Hohlstruktur zur Aufnahme der im aufgewickelten Zustand vollständig in diese aufgenommenen Projektionsträger (7, 8) eingerichtet ist, dass die Projektionsvorrichtung (13) mit einer entfernt angeordneten, zur Eingabe der auf den Projektionsträgern (7, 8) visuell darzustellenden Informationen eingerichteten Steuerung in Wirkverbindung steht und dass die Projektionsvorrichtung (13) zur Generierung mindestens eines zur Informationsdarstellung bestimmten Bildes eingerichtet ist.

2. Vorrichtung nach Anspruch 1, **dadurch gekennzeichnet, dass** mehrere voneinander beabstandete Projektionsvorrichtungen (13) vorgesehen sind, deren jede zur Generierung zumindest eines zur Informationsdarstellung bestimmten Bildes eingerichtet ist.

## Claims

1. Device for visually displaying information, comprising an arrangement of at least two web-shaped carriers which can be moved between an active position for conveying information and an inactive position not conveying information, which arrangement is incorporated into the frame of a football goal (1), wherein the carriers can be wound up and unwound independently of one another between the active and the inactive position about a horizontal axis (10) extending within the crossbar (4) of the football goal (1), and wherein drives (7, 8) are incorporated into the structure of the crossbar (4) of the football goal (1) for winding up and/or unwinding the carriers, **characterised in that** the crossbar (4) is formed as a hollow structure, in this case not changing the external appearance of the football goal (1), **in that** the carriers are projection carriers (7, 8), **in that** at least one projection device (13) is arranged at a spaced interval from and behind the football goal (1) in order to transmit information to the projection carriers (7, 8), **in that** the hollow structure is configured to receive the projection supports (7, 8) which, in the wound-up state, are received completely therein, **in that** the projection device (13) is operatively connected to a remotely arranged controller configured to input the information to be visually displayed on the projection carriers (7, 8), and **in that** the projection device (13) is configured to generate at least one image intended for displaying information.

2. Device as claimed in claim 1, **characterised in that** a plurality of mutually spaced-apart projection devices (13) are provided, each of which is configured to generate at least one image intended for displaying information.

## Revendications

1. Dispositif de représentation visuelle d'informations avec un ensemble d'au moins deux supports en forme de bande pouvant être déplacés entre une position active pour la transmission d'informations et une position inactive ne transmettant aucune information, lequel ensemble est intégré dans le cadre d'une cage de but (1), dans lequel les supports peuvent être enroulés et déroulés indépendamment les uns des autres autour d'un axe horizontal (10) s'étendant à l'intérieur du montant transversal (4) de la cage de but (1) entre la position active et la position inactive, et dans lequel des entraînements (7, 8) sont intégrés dans la structure du montant transversal (4) de la cage de but (1) pour enrouler et/ou dérouler les supports, **caractérisé en ce que** le montant transversal (4) est réalisé en tant que structure creuse, sans modifier dans le cas présent l'apparence extérieure de la cage de but (19, que les supports sont des supports de projection (7, 8), qu'au moins un dispositif de projection (13) est disposé à distance par rapport à la cage de but (1) et derrière celle-ci pour le transfert d'informations sur les supports de projection (7, 8), que la structure creuse est mise au point pour loger les supports de projection (7, 8) logés dans celle-ci en totalité dans l'état enroulé, que le dispositif de projection (13) coopère avec une commande disposée de manière éloignée, mise au point pour entrer les informations à représenter visuellement sur les supports de projection (7, 8), et que le dispositif de projection (13) est mis au point pour générer au moins une image destinée à la représentation d'informations.

2. Dispositif selon la revendication 1, **caractérisé en ce que** sont prévus plusieurs dispositifs de projection (13) tenus à distance les uns des autres, dont chacun est mis au point pour générer au moins une image destinée à la représentation d'informations.
